# FASCICULE DE BREVET EUROPEEN

(11) **EP 2 084 486 B1**
(45) Date de publication et mention de la délivrance du brevet: **15.12.2010**
(21) Numéro de dépôt: 07866437.2
(22) Date de dépôt: 25.10.2007
(51) Int. Cl.: F42B 3/04, B60R 21/264

(54) **GENERATEUR DE GAZ A CHAMBRES PRIMAIRE ET SECONDAIRE**
GASGENERATOR MIT PRIMÄR- UND SEKUNDÄRKAMMERN
GAS GENERATOR WITH PRIMARY AND SECONDARY CHAMBERS

(30) Priorité: 26.10.2006 FR 0609407; 27.02.2007 FR 0701402
(43) Date de publication de la demande: 05.08.2009
(60) Demande divisionnaire: 10177661.5
(73) Titulaire: Seva Technologies, 75009 Paris (FR)
(72) Inventeur: CORD, Paul-Philippe, 75009 Paris (FR); SIJILMASSI, Myriam, 31320 Castanet Tolosan (FR); ZAPATA-MASSOT, Céline, 31270 Villeneuve Tolosane (FR); FRANCES, Cédric, 31500 Toulouse (FR)
(74) Mandataire: Cabinet BARRE LAFORGUE & associés
(86) Numéro de dépôt international: PCT/FR2007/001764
(87) Numéro de publication internationale: WO 2008/050006

(56) Documents cités:
- EP-A1- 0 888 935
- WO-A-01/89885
- US-A- 5 897 136
- US-A1- 2006 005 734

## Description

L'invention concerne un dispositif de génération de gaz, dit générateur de gaz, comme décrit dans la demande de brevet EP0888935 A qui forme un point de départ pour le préambule de la revendication 1. En particulier, l'invention s'applique, dans le domaine de l'automobile, à un générateur de gaz destiné à être associé à un organe de sécurité, tel qu'un coussin gonflable (appelé airbag) ou un vérin prétensionneur de ceinture de sécurité, pour former un système de protection (par exemple en cas de choc) d'un occupant d'un véhicule. L'invention s'étend à d'autres domaines d'application tels que l'aéronautique (un tel générateur de gaz pouvant par exemple être associé à un toboggan de sécurité d'un avion), le spatial (un tel générateur de gaz pouvant par exemple être utilisé pour modifier la trajectoire d'un satellite), les sports (en association, par exemple, avec des organes de sécurité tels qu'une bouée ou une petite embarcation gonflable dans le cadre de sports nautiques, ou tels qu'une combinaison dans le cadre de sports de neige, etc.)...

Il existe principalement deux grandes familles de générateurs de gaz :
- les générateurs dits générateurs pyrotechniques, qui contiennent une charge explosible, généralement sous forme solide, dont la combustion ou la décomposition génère des gaz,
- les générateurs dits générateurs hybrides, qui contiennent à la fois une charge explosible (sous forme solide) et un gaz, neutre ou oxydant, stocké sous pression. Les générateurs de gaz hybrides présentent un encombrement supérieur à celui des générateurs de gaz pyrotechniques, à quantité de gaz générés égale, et une ossature renforcée dont le poids constitue un inconvénient.

L'invention concerne plus particulièrement un générateur de gaz pyrotechnique.

WO 01/89885, WO 2004/091981 et FR 05 12745, au nom de la demanderesse, décrivent des générateurs de gaz comprenant un corps tubulaire allongé intégrant :
- une chambre primaire pour le stockage et la combustion d'un composé pyrotechnique primaire ; la chambre primaire est formée par un premier tronçon du corps tubulaire, lequel tronçon est fermé axialement par une paroi épaisse percée d'une tuyère d'expulsion des produits de combustion du composé primaire ;
- une chambre secondaire pour le stockage et la décomposition d'un composé secondaire, les composés primaire et secondaire formant la charge explosible du générateur de gaz ; la chambre secondaire est formée par un deuxième tronçon du corps tubulaire, fermé axialement par une grille (ou paroi) présentant une ouverture d'entrée des produits de combustion du composé primaire,
- une zone de stabilisation qui, en fonctionnement, communique au moins avec la chambre secondaire et avec l'extérieur du générateur de gaz pour la libération des gaz générés ; la zone de stabilisation est formée par un troisième tronçon du corps tubulaire, intercalé entre les premier et deuxième tronçons formant respectivement les chambres primaire et secondaire ;
- un système d'allumage électrique adapté pour amorcer la combustion du composé primaire ; ce système d'allumage est au moins partiellement inséré dans la chambre primaire. Si nécessaire, en vue d'une meilleure reproductibilité quelle que soit la position du générateur de gaz lors de son déclenchement, le composé primaire est conditionné dans un cabochon inséré dans la chambre primaire et fixé contre le système d'allumage, de façon à concentrer le composé primaire à proximité du système d'allumage (notamment lorsque le volume de la chambre primaire est significativement supérieur au volume occupé par le composé primaire) ; ce cabochon est intégralement et instantanément détruit par l'allumage du composé primaire.

La réception, par le système d'allumage, d'une charge électrique prédéterminée amorce la combustion du composé primaire dans la chambre primaire. Les produits (gazeux) de combustion du composé primaire sont expulsés de la chambre primaire et pénètrent dans la zone de stabilisation par la tuyère d'expulsion, puis dans la chambre secondaire par l'ouverture d'entrée, en formant un jet dit jet primaire. Ce jet primaire vient frapper le composé secondaire, entraînant son craquage et sa décomposition. Une réaction d'oxydoréduction, dite post-combustion, s'opère entre des produits de combustion du composé primaire et/ou des produits de décomposition du composé secondaire. Les gaz générés s'échappent du générateur de gaz en passant par la zone de stabilisation.

Les composés primaire et secondaire sont choisis de façon à ce que le jet primaire "pilote" la décomposition du composé secondaire, ce dernier fournissant l'essentiel des gaz générés. A cette fin :
- le composé secondaire est un composé dont la décomposition autonome et totale nécessite, dans des conditions normales de fonctionnement du générateur de gaz, un temps au moins trois fois supérieur -et de préférence au moins dix fois supérieur- à une durée maximale de mission du générateur de gaz ; en particulier, le composé secondaire peut être un composé dont la décomposition n'est pas autoentretenue dans des conditions normales de fonctionnement du générateur de gaz (le temps nécessaire à sa décomposition autonome et totale est dans ce cas considéré comme étant infini) ;
- le composé primaire est un composé pyrotechnique dont la combustion est autoentretenue et génère des produits de combustion énergétiques (sous forme de jet primaire) possédant une énergie suffisante pour permettre et entretenir la décomposition du composé secondaire sur la durée maximale de mission du générateur de gaz. En d'autres termes, le composé primaire est un composé pyrotechnique apte à brûler seul et rapidement une fois allumé, et à générer un jet primaire très énergétique. La vitesse et la durée totale de décomposition du composé secondaire dépendent essentiellement du composé primaire et notamment de sa nature, de sa quantité initiale, de sa loi de combustion et du débit d'expulsion de ses produits de combustion.

La quantité de composé secondaire est choisie en fonction du volume de gaz à produire. Le composé secondaire comprend par exemple principalement du nitrate d'ammonium, apte à générer un important volume de gaz en se décomposant et, si nécessaire, à oxyder les produits de combustion du composé primaire de façon à limiter la quantité de gaz toxiques susceptibles de s'échapper du générateur de gaz.

La nature et la quantité de composé primaire sont choisies en fonction du débit de libération des gaz et de la durée maximale de mission souhaités. Le composé primaire peut être un propergol double base (à base de nitrocellulose et de nitroglycérine) et/ou un propergol composite (comprenant un liant organique et une charge oxydante) et/ou une poudre balistique de type Lova.

Les poudres balistiques de type Lova sont particulièrement appréciées pour leur stabilité et leur faible sensibilité à l'environnement (température, hygrométrie...). De plus, contrairement aux propergols composites, elles ne génèrent aucune poussière. En revanche, leur combustion s'effectue à pression élevée (cette combustion reste très difficile à maîtriser à des pressions inférieures à 500 bars) et leur vitesse de combustion est très dépendante de la pression. Afin de "lisser" quelque peu cette vitesse de combustion, la chambre primaire est volontairement surdimensionnée, son volume relativement important ayant pour effet de "tamponner" les variations de pression y survenant.

Les inventeurs ont constaté que, indépendamment de la nature du composé primaire utilisé et du volume de la chambre primaire :
- un tel générateur de gaz libère une quantité de gaz toxiques, issus de la combustion du composé primaire et/ou de la décomposition du composé secondaire, supérieure à celle qui devrait théoriquement subsister à l'issue de la post-combustion ;
- il reste, en fin de fonctionnement, des particules de composé primaire imbrûlées ; le rendement de combustion du composé primaire n'est donc pas maximal, ce qui oblige à prévoir une quantité de composé primaire supérieure à celle théoriquement nécessaire, et augmente plus encore les émissions toxiques ;
- même en tenant compte des particules imbrûlées susmentionnées, il est nécessaire de prévoir une quantité de composé primaire supérieure à celle strictement nécessaire pour décomposer le composé secondaire ;
- la combustion du composé primaire n'étant pas complète, le volume de gaz produit par le générateur de gaz et sa durée de fonctionnement dépendent de la quantité de composé réellement brûlée et peuvent donc légèrement varier en fonction des conditions de fonctionnement du générateur de gaz.

En outre, dans le cas où le composé primaire est une poudre balistique de type Lova et où le volume de la chambre primaire est volontairement surdimensionné :
- le générateur de gaz est plus encombrant, ce qui complique son intégration dans le système auquel il est destiné et limite les possibilités d'application,
- les parois de la chambre primaire subissent des efforts plus importants (ces efforts étant proportionnels à l'aire des parois, pour une pression donnée), qui obligent à les renforcer ; le générateur de gaz obtenu est donc également plus lourd ;
- le rendement de combustion du composé primaire est pénalisé par l'important volume de la chambre primaire, ce qui oblige à augmenter davantage la quantité de composé primaire (et donc également le volume de la chambre primaire).

L'invention vise à pallier ces inconvénients, en offrant un générateur de gaz amélioré par rapport aux générateurs de gaz décrits dans EP0888935A, WO 01/89885, WO 2004/091981 et FR 05 12745, et notamment un générateur de gaz plus léger, plus compact et aux performances maîtrisées.

Un objectif de l'invention est en particulier de fournir un générateur de gaz dans lequel la combustion du composé primaire est plus régulière et présente un rendement amélioré par rapport aux générateurs décrits dans EP0888935A, WO 01/89885, WO 2004/091981 et FR 05 12745. L'invention vise ainsi à réduire la quantité de composé primaire nécessaire pour décomposer une quantité de composé secondaire donnée.

Un objectif de l'invention est en particulier de fournir un générateur de gaz plus compact et dans lequel le composé primaire peut être une poudre balistique de type Lova.

Un autre objectif de l'invention est de fournir un générateur de gaz dans lequel le composé primaire peut être un propergol composite classique, et par exemple un propergol composite dont la balance oxygène a été ajustée, en dépit des éventuelles poussières que ce type de propergol génère.

Un autre objectif de l'invention est de fournir un générateur de gaz générant une quantité de gaz toxiques moindre et conforme aux diverses réglementations en vigueur en matière d'émissions toxiques.

Un autre objectif de l'invention est de fournir un générateur de gaz dont la fabrication répond à une logique de sous-ensembles.

Un autre objectif de l'invention est de fournir un générateur de gaz moins onéreux.

Pour ce faire, l'invention concerne un générateur de gaz comprenant un corps tubulaire intégrant :
- une chambre, dite chambre primaire, de stockage et de combustion d'un composé pyrotechnique dit composé primaire, ladite chambre primaire présentant au moins une tuyère d'expulsion adaptée pour permettre l'expulsion des produits de combustion du composé primaire en un jet, dit jet primaire, suivant une direction axiale du corps tubulaire,
- un ensemble, dit système d'allumage, adapté pour amorcer la combustion du composé primaire à réception d'un signal prédéterminé,
- une autre chambre, dite chambre secondaire, de stockage et de décomposition d'un composé dit composé secondaire, les composés primaire et secondaire étant adaptés pour que le(s) jet(s) primaire(s) pilote(nt) la décomposition du composé secondaire, au moins une partie de la chambre secondaire s'étendant dans le prolongement axial de la chambre primaire, la chambre secondaire présentant, en fonctionnement et pour chaque tuyère d'expulsion de la chambre primaire, une ouverture d'entrée du jet primaire correspondant, ménagée en regard de ladite tuyère d'expulsion selon la direction axiale,
- au moins une zone dite zone de stabilisation, qui, en fonctionnement, communique au moins avec la chambre secondaire et avec l'extérieur du générateur de gaz pour la libération des gaz générés.

A noter que, lorsque la chambre primaire présente une pluralité de tuyères d'expulsion délivrant des jets primaires selon la direction axiale, une même ouverture d'entrée de la chambre secondaire peut être associée à plusieurs tuyères d'expulsion (pour le passage de plusieurs jets primaires par cette ouverture). En variante, la chambre secondaire présente autant d'ouvertures d'entrée distinctes que de tuyères d'expulsion.

Dans toute la suite, le générateur de gaz est décrit dans un repère intrinsèque de coordonnées cylindriques, dont l'axe principal est parallèle à la direction axiale du corps tubulaire (c'est-à-dire à la direction du ou des jets primaires) et correspond par exemple à un axe central dudit corps. Les termes "direction radiale" désignent par conséquent une direction orthogonale à la direction axiale ; le terme "radialement" signifie "selon une direction radiale" ; et les termes "dimension radiale" désignent une dimension selon une direction radiale.

De préférence, le générateur de gaz comprend un corps tubulaire allongé, c'est-à-dire présentant une dimension axiale maximale supérieure -et de préférence très supérieure- à sa dimension radiale maximale. Mais il n'est pas exclu que le générateur de gaz présente un corps tubulaire plus aplati, par exemple en forme de galette ou de palet, dont la dimension axiale maximale est inférieure ou égale à la dimension radiale maximale.

L'invention réside dans le rapprochement de la chambre primaire et de la chambre secondaire.

Selon l'invention au moins une partie de ladite an moins une zone de stabilisation s'étend radialement à la périphérie de la chambre primaire.

Un générateur de gaz selon l'invention comprend par exemple une zone de stabilisation dont la majeure partie s'étend radialement à la périphérie de la chambre primaire et dont la partie restante s'étend axialement entre la chambre primaire et la chambre secondaire. En variante ou en combinaison, le générateur de gaz comprend une zone de stabilisation s'étendant entièrement radialement à la périphérie de la chambre primaire. En variante ou en combinaison, le générateur de gaz comprend une zone de stabilisation qui s'étend radialement à la périphérie à la fois de la chambre primaire et de la chambre secondaire.

On rappelle que dans les générateurs antérieurs connus de WO 01/89885, WO 2004/091981 et FR 05 12745, la zone de stabilisation s'étendait entièrement axialement entre la chambre primaire et la chambre secondaire. En reportant au moins une partie du volume nécessaire à la stabilisation des gaz (avant leur libération) autour de la chambre primaire (et éventuellement autour de la chambre secondaire), l'invention permet de rapprocher la chambre secondaire de la chambre primaire.

La distance séparant chaque tuyère d'expulsion (de la chambre primaire) et l'ouverture d'entrée associée (de la chambre secondaire) est choisie la plus faible possible, compte tenu notamment, d'une part de la nature du composé primaire utilisé, de sa quantité et du réglage (c'est-à-dire de la géométrie) de chaque tuyère d'expulsion (l'ensemble de ces paramètres déterminant en partie le débit d'expulsion et la densité énergétique des produits de combustion du composé primaire), et d'autre part du diamètre du corps tubulaire du générateur de gaz (lequel diamètre, qui dépend de l'application concernée, détermine en partie le volume pouvant être alloué à la zone de stabilisation autour de la chambre primaire). Avantageusement et selon l'invention, la distance séparant chaque tuyère d'expulsion et l'ouverture d'entrée associée est inférieure à 20 millimètres, et de préférence inférieure à 10 millimètres, notamment inférieure à 5 millimètre (ce qui n'exclut pas la possibilité que cette distance soit supérieure à 20 mm dans certaines applications). Si le diamètre du corps tubulaire du générateur de gaz le permet, la distance séparant chaque tuyère d'expulsion et l'ouverture d'entrée associée peut même être réduite à zéro.

A noter que chaque zone de stabilisation communique en fonctionnement avec l'extérieur du générateur de gaz par l'intermédiaire de trous de libération des gaz, ménagés dans le corps tubulaire du générateur. Avantageusement et selon l'invention, aucun trou de libération des gaz n'est ménagé dans la portion de corps tubulaire délimitée axialement d'une part par la ou les tuyères d'expulsion et d'autre part par la ou les ouvertures d'entrée. En variante, des trous sont ménagés dans cette portion de corps tubulaire ; de préférence une chemise est dans ce cas insérée en regard (radialement) de ces trous de façon à former une chicane sur le trajet d'évacuation des gaz générés. En d'autres termes, dans les deux cas, une paroi pleine s'étend, sensiblement selon la direction axiale, en regard radialement de l'éventuel interstice qui sépare la(ou les) tuyère(s) d'expulsion et la(ou les) ouvertures d'entrée.

Selon l'invention, la chambre primaire est préférentiellement formée par une enceinte qui est insérée dans le corps tubulaire et qui présente, selon une direction radiale, une dimension externe inférieure à la dimension interne du corps tubulaire de façon à ce qu'un volume interne soit ménagé entre l'enceinte et le corps tubulaire selon cette direction radiale, ce volume réalisant une zone de stabilisation ou une partie d'une zone de stabilisation. Par exemple, l'enceinte présente une dimension radiale externe maximale (il s'agit de son diamètre externe si l'enceinte est globalement cylindrique de section circulaire et que son axe s'étend selon la direction axiale) qui est notablement inférieure à la dimension radiale interne minimale du corps tubulaire du générateur de gaz (il s'agit du diamètre interne dudit corps tubulaire si celui-ci est globalement cylindrique de section circulaire). Dans ce cas, un volume interne annulaire entourant l'enceinte est ménagé entre l'enceinte et le corps tubulaire. Ce volume annulaire réalise une zone de stabilisation ou une partie d'une zone de stabilisation.

Ainsi, contrairement aux générateurs antérieurs décrits dans WO 01/89885, WO 2004/091981 et FR 05 12745, la chambre primaire et la zone de stabilisation ne sont pas formées par deux tronçons de corps tubulaire qui se succèdent selon la direction axiale. Selon l'invention, la chambre primaire est formée par une enceinte de moindre diamètre (ou dimension radiale) logée à l'intérieur d'un premier tronçon du corps tubulaire, et la zone de stabilisation s'étend au moins partiellement dans ce même premier tronçon, entre l'enceinte et le corps tubulaire. La chambre secondaire est de préférence formée par un deuxième tronçon du corps tubulaire, adjacent axialement au premier tronçon.

L'invention a donc consisté à modifier la structure des générateurs antérieurs décrits dans EP0888935A, WO 01/89885, WO 2004/091981 et FR 05 12745 de façon à réduire la distance séparant chaque tuyère d'expulsion de la chambre primaire et l'ouverture d'entrée associée de la chambre secondaire. Pour ce faire, la zone de stabilisation -si elle est unique- a été aménagée radialement à la périphérie de la chambre primaire.

Ces modifications structurelles ont permis d'obtenir un meilleur rendement de combustion dans la chambre primaire et un meilleur rendement de décomposition dans la chambre secondaire, de diminuer ainsi les quantités de composés primaire et secondaire nécessaires pour produire un volume de gaz donné, et de réduire les émissions toxiques.

Les inventeurs expliquent a posteriori ces résultats par l'existence, dans les générateurs antérieurs, de phases transitoires initiale et finale, respectivement en début et en fin de combustion du composé primaire. En début de combustion du composé primaire, le jet primaire présente un débit insuffisant pour pouvoir percer directement l'opercule obturant l'ouverture d'entrée de la chambre secondaire ou pressuriser la zone de stabilisation à cette fin. Dans les générateurs antérieurs, les produits de combustion du composé primaire expulsés de la chambre primaire dans la zone de stabilisation durant cette phase transitoire initiale, s'échappent donc directement du générateur de gaz sans subir de post-combustion. Non seulement ces produits contribuent aux émissions toxiques (ils contiennent principalement du monoxyde de carbone), mais de plus et surtout ils ne participent pas à la décomposition du composé secondaire. En fin de combustion du composé primaire, le jet primaire s'affaiblit et ne présente plus une énergie suffisante pour décomposer complètement la totalité du composé secondaire. Pour obtenir une décomposition à la fois complète (en terme de degré d'oxydoréduction) et totale (en terme de quantité de composé secondaire décomposé) du composé secondaire, un excès de composé primaire doit être prévu.

A l'inverse, dans un générateur selon l'invention, la proximité entre chaque tuyère d'expulsion et l'ouverture d'entrée associée limite considérablement la déperdition d'énergie (dans la zone de stabilisation) dont souffre le jet primaire dans les générateurs antérieurs. Le jet primaire selon l'invention est ainsi apte, dès sa génération, à percer l'opercule obturant l'ouverture d'entrée de la chambre secondaire et à maintenir, jusqu'à son extinction, un niveau d'énergie suffisant dans ladite chambre secondaire pour décomposer complètement et totalement le composé secondaire. L'intégralité des produits de combustion du composé primaire pénètre dans la chambre secondaire pour y décomposer le composé secondaire et subir éventuellement une post-combustion, avant de s'échapper du générateur de gaz. Il est donc possible de diminuer la quantité de composé primaire à prévoir, pour une quantité de composé secondaire donnée (c'est-à-dire pour un volume de gaz à produire donné), et ce de façon significative. Cette diminution de la quantité de composé primaire autorise également à :
- réduire le volume de la chambre primaire, et obtenir ainsi un générateur de gaz non seulement plus compact mais aussi plus léger (l'ossature résistante du générateur pouvant être amincie). A noter que cette réduction du volume de la chambre primaire favorise l'allumage et la combustion du composé primaire, et limite la quantité de particules imbrûlées et la toxicité associée. Il en résulte une meilleure reproductibilité (en d'autres termes, les performances du générateur de gaz sont sensiblement identiques quelles que soient les conditions de fonctionnement) et la possibilité de diminuer plus encore la quantité de composé primaire à prévoir pour générer un volume de gaz donné,
- utiliser des propergols composites de formulations classiques -et en particulier ceux utilisés dans les générateurs de gaz destinés à la sécurité automobile-, les éventuelles poussières résultantes étant produites dans des quantités suffisamment faibles pour ne pas perturber le fonctionnement du générateur de gaz ni risquer d'endommager son environnement (et notamment le coussin gonflable de sécurité auquel le générateur de gaz est associé dans certaines applications du domaine automobile),
- utiliser des poudres balistiques de type Lova tout en disposant d'un générateur de gaz compact et léger (le volume de la chambre primaire, même surdimensionné, étant significativement plus petit que celui des générateurs antérieurs).

En outre, dans un générateur selon l'invention, les émissions toxiques sont considérablement réduites, compte tenu à la fois de l'utilisation d'une plus faible quantité de composé primaire et d'une réaction d'oxydoréduction complète et totale des produits de combustion du composé primaire et des produits de décomposition du composé secondaire.

Enfin, l'invention permet de réduire considérablement le coût de revient d'un générateur de gaz, étant rappelé que les composés utilisés à titre de composé primaire selon l'invention sont particulièrement onéreux et constituent une part essentielle de ce coût.

A noter qu'il est possible d'utiliser, à titre de composé primaire, non seulement un composé dont la balance oxygène est négative et dont au moins une partie des produits de combustion réducteurs toxiques (tels que le monoxyde de carbone) doit être oxydée par des produits de décomposition du composé secondaire, mais aussi un composé dont la balance oxygène est sensiblement nulle et dont les produits de combustion réducteurs toxiques peuvent être oxydés, en partie ou en totalité, par d'autres produits de combustion du composé primaire. En tout état de cause, les caractéristiques thermodynamiques (température et composition) des gaz générés sortant du générateur de gaz ne dépendent pas des caractéristiques thermodynamiques des produits du seul composé primaire ; elles dépendent uniquement des caractéristiques thermodynamiques du mélange formé par les produits de combustion du composé primaire et les produits de décomposition du composé secondaire. En d'autres termes, elles dépendent de la composition de la charge explosible constituée par le composé primaire et le composé secondaire, considérée dans sa globalité. Cette charge explosible doit avoir de préférence une balance oxygène globale nulle ou négative. En fonction du composé primaire, le composé secondaire peut être un composé dont la balance oxygène est positive, nulle ou négative. A noter toutefois que la contribution du composé primaire à la balance oxygène globale est relativement faible, compte tenu de la faible proportion massique dudit composé primaire dans la charge explosible. Les réactions d'oxydoréduction survenant entre les produits de combustion du composé primaire et/ou les produits de décomposition du composé secondaire ont lieu pour partie dans la chambre secondaire et pour partie dans la ou les zones de stabilisation.

Avantageusement et selon l'invention, la chambre primaire présente une longueur interne maximale L, selon une direction longitudinale de ladite chambre, et une largeur interne maximale Φ, selon une direction transversale orthogonale à la direction longitudinale, dont le rapport L/Φ est supérieur à 1,5, le système d'allumage étant agencé à une extrémité longitudinale de la chambre primaire. De préférence, la direction longitudinale de la chambre primaire coïncide avec la direction axiale du corps tubulaire du générateur de gaz. A noter que lorsque la chambre primaire est cylindrique de section circulaire, sa largeur Φ correspond au diamètre interne du cylindre.

En d'autres termes, la chambre primaire d'un générateur selon l'invention présente une largeur ou un diamètre réduit(e) comparé aux générateurs antérieurs. La présence de particules de composé primaire autour radialement (c'est-à-dire selon toute direction transversale de la chambre) du système d'allumage est par conséquent limitée. L'énergie fournie par le système d'allumage est donc quasiment intégralement transmise au composé primaire selon la direction longitudinale de la chambre primaire (et donc généralement selon la direction axiale du corps tubulaire du générateur de gaz). Il en résulte que la qualité de l'allumage du composé primaire dépend peu des conditions de fonctionnement du générateur de gaz, et notamment de son environnement et de sa position. Le générateur de gaz selon l'invention est plus fiable. En outre, on obtient un rendement de combustion du composé primaire proche de 100% (quantité de particules imbrûlées négligeable voire nulle), qui autorise une réduction supplémentaire de la quantité de composé primaire à prévoir pour un volume de gaz à produire donné.

Avantageusement et selon l'invention, le générateur de gaz présente une ou plusieurs des caractéristiques suivantes :
- le composé primaire représente moins de 16% en poids, et de préférence moins de 10% en poids, de la charge explosible formée par les composés primaire et secondaire ;
- la chambre primaire contient moins de 4 grammes, et de préférence moins de 2 grammes, de composé primaire ;
- le composé primaire est choisi parmi : les propergols double base ; les propergols composites (quelle que soit leur balance oxygène) ; en particulier, les propergols composites intégrant au moins un additif apte à ajuster la balance oxygène du composé primaire ; les poudres balistiques de type Lova ; les compositions pyrotechniques à base de nitrate basique de cuivre et de nitrate de guanidine ; les composés précédemment cités intégrant de plus un ou plusieurs additifs ; des mélanges ou associations des composés précédemment cités. A noter que chaque additif que contient éventuellement le composé primaire peut être associé ou mélangé au(x) composant(s) de base ;
- le composé secondaire est choisi parmi : un composant de base choisi parmi le nitrate d'ammonium, le nitrate de guanidine, le nitrate basique de cuivre ; des mélanges ou associations de ces composants de base ; l'un des composants de base précédemment cités auquel est mélangé ou associé au moins un additif apte à ajuster la balance oxygène du composé secondaire ou de la charge explosible (formée par les composés primaire et secondaire) ; l'un des composants de base précédemment cités auquel est mélangé ou associé au moins un additif choisi parmi les dérivés de la guanidine (nitro-guanidine, nitrate de guanidine...), les polyesters, l'acétate d'ammonium, l'oxamide ou l'oxamide d'ammonium ou un dérivé de ces derniers, l'urée ou un dérivé de celle-ci (nitro-urée par exemple), l'hexogène, l'octogène, l'aminotétrazole... ; l'un des composants de base précédemment cités auquel est mélangé ou associé au moins un additif apte, dans sa forme initiale et/ou dans ses produits de décomposition, à absorber une partie de l'énergie des produits de combustion du composé primaire et à augmenter ainsi la température du composé secondaire ; des mélanges ou associations des composés précités.

Les termes "mélangé" et "mélange" employés précédemment signifient que les deux composants en présence (par exemple nitrate d'ammonium et additif) sont intimement mêlés de façon à former un composé homogène, tandis que les termes "associé" ou "association" signifient que les deux composants en présence sont agencés par couches distinctes de façon à former un composé hétérogène.

L'invention s'étend à un système à génération de gaz comprenant un générateur de gaz selon l'invention et une enceinte gonflable (telle qu'un coussin gonflable), agencés de manière à ce que les gaz libérés par le générateur de gaz puissent gonfler ladite enceinte. L'invention s'étend également à un système à génération de gaz comprenant un générateur de gaz selon l'invention et un vérin, agencés de manière à ce que les gaz libérés par le générateur de gaz puissent pressuriser le vérin. Ces deux systèmes peuvent notamment être intégrés dans un véhicule automobile pour garantir la sécurité des occupants du véhicule.

L'invention concerne également un générateur de gaz et un système à génération de gaz caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue schématique en coupe longitudinale d'un premier mode de réalisation de l'invention,
- la figure 2 est une vue schématique en coupe longitudinale d'un deuxième mode de réalisation de l'invention,

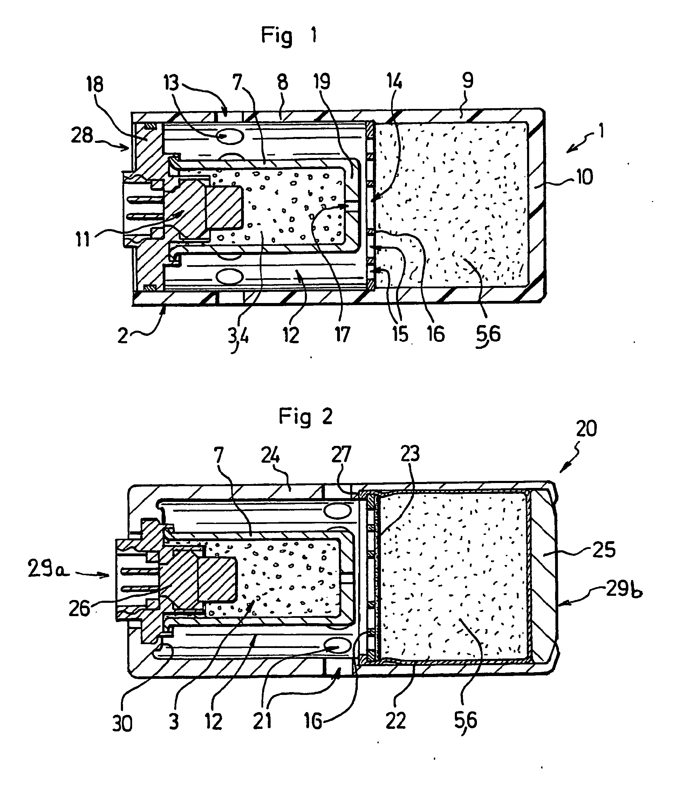

La figure 1 illustre un générateur de gaz 1 de forme globale cylindrique allongée de section circulaire, comprenant un corps tubulaire 2 allongé renfermant : un système d'allumage réalisé par un initiateur 11 traditionnel, une chambre primaire 3 contenant un composé primaire pyrotechnique 4, une chambre secondaire 5 contenant un composé secondaire 6, et une zone de stabilisation 12. A noter que le corps tubulaire 2 est monobloc et que sa face externe est cylindrique.

L'initiateur 11 comprend, de façon usuelle : une embase généralement moulée par laquelle il est fixé de façon hermétique à un support 18, lui-même fixé de façon hermétique au corps tubulaire 2 ; un connecteur électrique par lequel il peut recevoir une charge électrique en vue du déclenchement du générateur de gaz ; un filament ; une charge initiatrice et une charge renforçatrice ou amplificatrice encapsulées dans un cabochon qui est en contact direct avec le composé primaire 4. Cet initiateur 11 pourrait être remplacé par tout type de système d'allumage, apte à être déclenché par un signal électrique ou encore pneumatique, hydraulique, mécanique, optique, électromagnétique... En particulier, l'initiateur 11 pourrait être remplacé par un système d'allumage à laser.

Selon l'invention, la chambre primaire 3 est délimitée par l'initiateur 11 et par une enceinte tubulaire 7 comportant une paroi périphérique cylindrique de section circulaire, dont le diamètre externe est notablement inférieur (en l'exemple illustré, entre 1,5 et 2 fois inférieur) au diamètre interne du corps tubulaire 2. L'enceinte 7 est portée par le support de fixation 18 de l'initiateur. Elle s'étend axialement à l'intérieur d'un tronçon 8 du corps 2, son axe de symétrie de révolution coïncidant sensiblement avec celui dudit corps. La chambre primaire 3 ainsi formée présente une longueur interne L près de deux fois supérieure à son diamètre interne Φ. L'enceinte 7 comprend, à l'opposé de l'initiateur 11, une paroi d'extrémité axiale 19 qui s'étend transversalement et est percée d'un orifice 17 faisant office de tuyère d'expulsion des produits de combustion du composé primaire 4. Cette tuyère d'expulsion 17 est sensiblement centrée sur l'axe de symétrie de révolution du corps tubulaire 2. Elle est initialement obturée par un opercule (non représenté). L'allumage (par l'initiateur 11) du composé primaire 4 entraîne une augmentation de la pression à l'intérieur de la chambre primaire, qui provoque la rupture de cet opercule. Les produits de combustion du composé primaire s'échappent de la chambre primaire 3 en formant un jet primaire suivant la direction axiale du corps tubulaire, lequel jet primaire est sensiblement centré sur l'axe (de symétrie) dudit corps.

Le composé primaire 4 est de préférence un propergol double base ou composite, mélangé ou associé à un additif oxydant de façon à présenter une balance oxygène nulle ou légèrement négative, ou une poudre balistique de type Lova. Cela étant, tout autre composé notamment apte à brûler de façon autonome peut être utilisé. Par ailleurs, le composé primaire est de préférence un solide divisé : poudre et/ou pastilles et/ou brins et/ou feuilles.

La chambre secondaire 5 est délimitée par un tronçon 9 du corps tubulaire, par le fond 10 dudit corps, et par une grille 16 métallique plane de section circulaire, s'étendant transversalement dans le corps tubulaire 2. La grille 16 présente d'une part une ouverture d'entrée 14 par laquelle le jet primaire peut pénétrer dans la chambre secondaire ; cette ouverture d'entrée 14 est centrée sur l'axe du corps tubulaire ; autrement dit, elle s'étend en regard de la tuyère d'expulsion 17 selon la direction axiale, c'est-à-dire selon la direction du jet primaire. La grille 16 présente d'autre part des ouvertures d'évacuation 15 périphériques par lesquelles les gaz générés peuvent s'échapper dans la zone de stabilisation 12. La distance entre l'ouverture d'entrée 14 et la tuyère d'expulsion 17 est en l'exemple inférieure à 5 mm. Autrement dit, la grille 16 s'étend à proximité immédiate de la paroi d'extrémité 19 de l'enceinte 7 de la chambre primaire.

Le composé secondaire 6 est de préférence un solide divisé : poudre et/ou pastilles et/ou brins et/ou feuilles. Il est avantageusement conditionné à l'intérieur d'un sac souple étanche (non représenté), formé par un film ou un complexe de films, par exemple en matière plastique ou en aluminium ou tout autre matière compatible. Ce sac obture initialement l'ensemble des ouvertures de la grille 16. Il est instantanément et entièrement détruit dès que le jet primaire traverse l'ouverture d'entrée 14. Le composé secondaire 6 comprend de préférence du nitrate d'ammonium mélangé ou associé à un ou plusieurs dérivés de la guanidine (nitrate de guanidine, nitroguanidine...) ou à du nitrate basique de cuivre, de façon à présenter une balance oxygène nulle ou légèrement négative.

La zone de stabilisation 12 est délimitée par le tronçon 8 du corps tubulaire, l'enceinte 7 de la chambre primaire, le support de fixation 18 de l'initiateur et la grille 16. La grille 16 étant quasiment accolée à la paroi d'extrémité axiale 19 de l'enceinte 7, la zone de stabilisation est essentiellement formée par le volume annulaire cylindrique s'étendant radialement autour de l'enceinte 7 (entre ladite enceinte et le tronçon 8 du corps tubulaire). Le tronçon 8 est percé d'une pluralités de lumières 13, dites trous de libération des gaz, réparties tout autour du générateur de gaz sur une même section du corps tubulaire. Dans le générateur de gaz 1, ces trous 13 de libération des gaz sont ménagés à distance de la chambre secondaire (ils sont plus proches du support de fixation 18 que de la grille 16).

A l'instar du générateur de gaz 1, le générateur de gaz 20 illustré sur la figure 2 comprend une chambre primaire 3 délimitée par une enceinte 7 et un initiateur 26 similaire -à l'exception de la forme de son support de fixation-à l'initiateur 11, une chambre secondaire 5 et une zone de stabilisation 12. Le générateur de gaz 20 diffère du générateur de gaz 1 par la forme de son corps tubulaire (non monobloc), qui comprend d'une part un fond 25 et d'autre part un tube 24, dont une extrémité axiale est repliée autour du support de fixation de l'initiateur 26 et dont l'autre extrémité axiale est repliée contre le fond 25. Le générateur 20 diffère aussi du générateur 1 en ce que son composé secondaire 6 est conditionné (par exemple sous forme pulvérulente ou granulée) dans une cartouche rigide 22. Cette cartouche intègre la grille 16 ainsi qu'un opercule 23 qui est instantanément détruit dès la génération du jet primaire. La cartouche 22 présente un diamètre externe maximal adapté pour permettre son insertion dans le tube 24 du générateur de gaz et son calage contre un épaulement interne 27 ménagé dans ledit tube. Le générateur de gaz 20 diffère également du générateur 1 par la position de ses trous 21 de libération de gaz. Ces trous 21 sont ménagés dans le tube 24 à proximité de la chambre secondaire 5.

La fabrication des deux générateurs de gaz précédemment décrits répond à une logique de sous-ensembles. La chambre primaire 3 et l'initiateur 11 (ou 26) forment un sous-ensemble compact d'un seul tenant, inséré dans le corps tubulaire 2 (ou 24). Ce sous-ensemble réalise un microgénérateur. En pratique, il s'agit avantageusement d'un microgénérateur connu disponible dans le commerce. Par ailleurs, le composé secondaire est conditionné dans un sac souple ou une cartouche rigide, qui forme un sous-ensemble facile à manipuler, inséré dans le corps tubulaire. La fabrication des générateurs de gaz 1 et 20 en est extrêmement simplifiée. Une fois ces sous-ensembles réalisés, pour obtenir le générateur de gaz 1, il suffit d'introduire successivement dans le corps tubulaire 2, par son extrémité axiale 28 ouverte : le sac contenant le composé secondaire ; la grille 16, que l'on cale contre un épaulement prévu à cet effet et que l'on fixe au corps tubulaire, par exemple par collage ou par sertissage (en déformant ledit corps de façon à réaliser un étranglement dans ce dernier) ; le microgénérateur, dont on fixe le support 18 au corps tubulaire (par collage ou sertissage). De façon équivalente, pour obtenir le générateur de gaz 20, on introduit le microgénérateur dans le tube 24, par l'extrémité axiale 29a de ce dernier, jusqu'à venir caler le microgénérateur contre un rebord 30 dudit tube, puis on replie l'extrémité axiale 29a du tube contre le support de fixation de l'initiateur 26. On introduit aussi successivement, par l'extrémité axiale 29b du tube : la cartouche 22 (qui porte la grille 16), que l'on place en butée contre l'épaulement 27 du tube ; le fond 25, que l'on plaque contre le fond de la cartouche et contre lequel on replie l'extrémité axiale 29b du tube.

## Revendications

1. Générateur de gaz comprenant un corps tubulaire (2) intégrant :
- une chambre (3), dite chambre primaire, de stockage et de combustion d'un composé pyrotechnique (4) dit composé primaire, ladite chambre primaire présentant au moins une tuyère d'expulsion (17) adaptée pour permettre l'expulsion des produits de combustion du composé primaire en un jet, dit jet primaire, suivant une direction axiale du corps tubulaire,
- un ensemble (11), dit système d'allumage, adapté pour amorcer la combustion du composé primaire à réception d'un signal prédéterminé,
- une autre chambre (5), dite chambre secondaire, de stockage et de décomposition d'un composé (6) dit composé secondaire, les composés primaire et secondaire étant adaptés pour que le(s) jet(s) primaire(s) pilote(nt) la décomposition du composé secondaire, au moins une partie de la chambre secondaire s'étendant dans le prolongement axial de la chambre primaire, la chambre secondaire présentant, en fonctionnement et pour chaque tuyère d'expulsion de la chambre primaire, une ouverture (14) d'entrée du jet primaire correspondant, ménagée en regard de ladite tuyère d'expulsion selon la direction axiale,
- au moins une zone (12) dite zone de stabilisation, qui, en fonctionnement, communique au moins avec la chambre secondaire et avec l'extérieur du générateur de gaz pour la libération des gaz générés,
**caractérisé en ce qu'** au moins une partie de ladite au moins une zone de stabilisation (12) s'étend radialement à la périphérie de la chambre primaire (3):

2. Générateur de gaz selon la revendication 1, **caractérisé en ce que** la chambre primaire est formée par une enceinte (7) qui est insérée dans le corps tubulaire et qui présente, selon une direction radiale, une dimension externe inférieure à la dimension interne du corps tubulaire de façon à ce qu'un volume interne soit ménagé entre l'enceinte et le corps tubulaire selon cette direction radiale, ce volume réalisant une zone de stabilisation ou une partie d'une zone de stabilisation.

3. Générateur de gaz selon l'une des revendications 1 ou 2, **caractérisé en ce que** la distance séparant chaque tuyère d'expulsion (17) et l'ouverture d'entrée associée (14) est inférieure à 20 mm.

4. Générateur de gaz selon la revendication 3, **caractérisé en ce que** la distance séparant chaque tuyère d'expulsion (17) et l'ouverture d'entrée associée (14) est inférieure à 5 mm.

5. Générateur de gaz selon l'une des revendications 1 à 4, **caractérisé en ce que** la chambre primaire (3) présente une longueur interne maximale L, selon une direction longitudinale de ladite chambre, et une largeur interne maximale Φ, selon une direction transversale orthogonale à la direction longitudinale, dont le rapport L/Φ est supérieur à 1,5, le système d'allumage étant agencé à une extrémité longitudinale de la chambre primaire.

6. Générateur de gaz selon l'une des revendications 1 à 5, **caractérisé en ce que** le composé primaire (4) représente moins de 16% en poids de la charge explosible formée par les composés primaire et secondaire.

7. Générateur de gaz selon la revendication 6, **caractérisé en ce que** le composé primaire (4) représente moins de 10% en poids de la charge explosible formée par les composés primaire et secondaire.

8. Générateur de gaz selon l'une des revendications 1 à 7, **caractérisé en ce que** la chambre primaire contient moins de 4 grammes de composé primaire (4).

9. Générateur de gaz selon la revendication 8, **caractérisé en ce que** la chambre primaire contient moins de 2 grammes de composé primaire (4).

10. Générateur de gaz selon l'une des revendications 1 à 9, **caractérisé en ce que** le composé primaire (4) est choisi parmi : les propergols double base ; les propergols composites ; les propergols composites intégrant au moins un additif apte à ajuster la balance oxygène du composé primaire ; les poudres balistiques de type Lova ; les compositions pyrotechniques à base de nitrate basique de cuivre et de nitrate de guanidine ; les composés précédemment cités intégrant de plus un ou plusieurs additifs ; des mélanges ou associations des composés précédemment cités.

11. Générateur de gaz selon l'une des revendications 1 à 10, **caractérisé en ce que** le composé secondaire (6) est choisi parmi : un composant de base choisi parmi le nitrate d'ammonium, le nitrate de guanidine, le nitrate basique de cuivre ; des mélanges ou associations de ces composants de base ; l'un des composants de base précédemment cités auquel est mélangé ou associé au moins un additif apte à ajuster la balance oxygène du composé secondaire ou de la charges explosible ; l'un des composants de base précédemment cités auquel est mélangé ou associé au moins un additif choisi parmi les dérivés de la guanidine, les polyesters, l'acétate d'ammonium, l'oxamide ou l'oxamide d'ammonium ou un dérivé de ces derniers, l'urée ou un dérivé de celle-ci, l'hexogène, l'octogène, l'aminotétrazole ; l'un des composants de base précédemment cités auquel est mélangé ou associé au moins un additif apte, dans sa forme initiale et/ou dans ses produits de décomposition, à absorber une partie de l'énergie des produits de combustion du composé primaire ; des mélanges ou associations des composés précités.

12. Système à génération de gaz comprenant un générateur de gaz selon l'une des revendications 1 à 11 et une enceinte gonflable, agencés de manière à ce que les gaz libérés par le générateur de gaz puissent gonfler ladite enceinte.

13. Système à génération de gaz comprenant un générateur de gaz selon l'une des revendications 1 à 11 et un vérin, agencés de manière à ce que les gaz libérés par le générateur de gaz puissent pressuriser le vérin.

## Claims

1. Gas generator comprising a tubular body (2) including:
- a chamber (3), called the primary chamber, for storage and combustion of a pyrotechnic compound (4), called the primary compound, said primary chamber having at least one expulsion nozzle (17) suitable for permitting expulsion of the combustion products of the primary compound in the form of a jet, called the primary jet, in an axial direction of the tubular body,
- an assembly (11), called the ignition system, suitable for starting combustion of the primary compound on receipt of a predetermined signal,
- another chamber (5), called the secondary chamber, for storage and decomposition of a compound (6), called the secondary compound, the primary and secondary compounds being adapted so that the primary jet(s) control the decomposition of the secondary compound, at least part of the secondary chamber extending as an axial continuation of the primary chamber, the secondary chamber having, during operation and for each expulsion nozzle of the primary chamber, an inlet opening (14) for the corresponding primary jet, which inlet opening (14) is formed opposite said expulsion nozzle in the axial direction,
- at least one zone (12), called the stabilisation zone, which, during operation, communicates at least with the secondary chamber and with the outside of the gas generator in order to release the generated gases, **characterised in that** at least part of said stabilisation zone (12) extends radially at the periphery of the primary chamber (3).

2. Gas generator according to claim 1, **characterised in that** the primary chamber is formed by an enclosure (7) which is inserted into the tubular body and which has, in a radial direction, an outside dimension smaller than the inside dimension of the tubular body so that an inside space is formed between the enclosure and the tubular body **in that** radial direction, that space forming a stabilisation zone or part of a stabilisation zone.

3. Gas generator according to either claim 1 or claim 2, **characterised in that** the distance separating each expulsion nozzle (17) and the associated inlet opening (14) is less than 20 mm.

4. Gas generator according to claim 3, **characterised in that** the distance separating each expulsion nozzle (17) and the associated inlet opening (14) is less than 5 mm.

5. Gas generator according to any one of claims 1 to 4, **characterised in that** the primary chamber (3) has a maximum inside length L, in a longitudinal direction of said chamber, and a maximum inside width Φ, in a transverse direction orthogonal to the longitudinal direction, the ratio L/Φ of which is greater than 1.5, the ignition system being arranged at a longitudinal end of the primary chamber.

6. Gas generator according to any one of claims 1 to 5, **characterised in that** the primary compound (4) represents less than 16 wt.% of the explosive charge formed by the primary and secondary compounds.

7. Gas generator according to claim 6, **characterised in that** the primary compound (4) represents less than 10 wt.% of the explosive charge formed by the primary and secondary compounds.

8. Gas generator according to any one of claims 1 to 7, **characterised in that** the primary chamber contains less than 4 grams of primary compound (4).

9. Gas generator according to claim 8, **characterised in that** the primary chamber contains less than 2 grams of primary compound (4).

10. Gas generator according to any one of claims 1 to 9, **characterised in that** the primary compound (4) is selected from: double-base propellants; composite propellants; composite propellants including at least one additive capable of adjusting the oxygen balance of the primary compound; ballistic powders of the Lova type; pyrotechnic compositions based on basic copper nitrate and guanidine nitrate; the above-mentioned compounds additionally including one or more additives; mixtures or associations of the above-mentioned compounds.

11. Gas generator according to any one of claims 1 to 10, **characterised in that** the secondary compound (6) is selected from: a base component selected from ammonium nitrate, guanidine nitrate, basic copper nitrate; mixtures or associations of those base components; one of the above-mentioned base components in admixture or in association with at least one additive capable of adjusting the oxygen balance of the secondary compound or of the explosive charge; one of the above-mentioned base components in admixture or in association with at least one additive selected from guanidine derivatives, polyesters, ammonium acetate, oxamide or ammonium oxamide or a derivative thereof, urea or a derivative thereof, hexogen, octogen, aminotetrazole; one of the above-mentioned base components in admixture or in association with at least one additive capable, in its initial form and/or in its decomposition products, of absorbing part of the energy of the combustion products of the primary compound; mixtures or associations of the above-mentioned compounds.

12. Gas-generating system, comprising a gas generator according to any one of claims 1 to 11 and an inflatable enclosure, which gas generator and which enclosure are so arranged that the gases released by the gas generator are able to inflate said enclosure.

13. Gas-generating system, comprising a gas generator according to any one of claims 1 to 11 and a jack, which gas generator and which jack are so arranged that the gases released by the gas generator are able to pressurise the jack.

## Patentansprüche

1. Gasgenerator mit einem rohrförmigen Körper, der folgende Teile umfaßt:
- eine Kammer (3), die sogenannte Primärkammer, für das Lagern und das Verbrennen einer pyrotechnischen Verbindung (4), die sogenannte Primärverbindung, wobei die besagte Primärkammer mindestens eine Ausstoßdüse (17) aufweist, die geeignet ist, den Ausstoß der Verbrennungserzeugnisse der Primärverbindung in einem Strahl, dem sogenannten Primärstrahl, in einer axialen Richtung des rohrförmigen Körpers zu ermöglichen,
- eine Baugruppe (11), das sogenannte Zündsystem, das geeignet ist, die Verbrennung der Primärverbindung bei Eingang eines vorbestimmten Signals einzuleiten,
- eine weitere Kammer (5), die sogenannte Sekundärkammer, für das Lagern und das Zersetzen einer Verbindung (6), die sogenannte Sekundärverbindung, wobei die Primär- und die Sekundärverbindung geeignet sind, damit der/die Primärstrahl(e) die Zersetzung der Sekundärverbindung steuert/n, wobei sich zumindest ein Teil der Sekundärkammer in der axialen Verlängerung der Primärkammer erstreckt, wobei die Sekundärkammer im Betrieb und für jede Ausstoßdüse der Primärkammer eine Eingangsöffnung (14) für den entsprechenden Primärstrahl aufweist, die vor der besagten Ausstoßdüse in der axialen Richtung gestaltet ist,
- zumindest eine Zone (12), die sogenannte Stabilisierungszone, die im Betrieb mit zumindest der Sekundärkammer und dem Äußeren des Gasgenerators für die Freisetzung der generierten Gase verbunden ist,
**dadurch gekennzeichnet, daß** sich zumindest ein Teil der besagten Stabilisierungszone (12) radial an der Peripherie der Primärkammer (3) erstreckt.

2. Gasgenerator nach Anspruch 1, **dadurch gekennzeichnet, daß** die Primärkammer von einem Raum (7) gebildet wird, der in den rohrförmigen Körper eingesetzt ist, und der in einer radialen Richtung eine Außenabmessung kleiner als die Innenabmessung des rohrförmigen Körpers aufweist, so daß ein Innenvolumen zwischen dem Raum und dem rohrförmigen Körper in dieser radialen Richtung gestaltet ist, wobei dieses Volumen eine Stabilisierungszone oder einen Teil einer Stabilisierungszone realisiert.

3. Gasgenerator nach einem beliebigen der vorstehenden Ansprüche 1 oder 2, **dadurch gekennzeichnet, daß** der Abstand, der jede Ausstoßdüse (17) und die zugehörige Eingangsöffnung (14) trennt, geringer als 20 mm ist.

4. Gasgenerator nach Anspruch 3, **dadurch gekennzeichnet, daß** der Abstand, der jede Ausstoßdüse (17) und die zugehörige Eingangsöffnung (14) trennt, geringer als 5 mm ist.

5. Gasgenerator nach einem beliebigen der vorstehenden Ansprüche 1 bis 4, **dadurch gekennzeichnet, daß** die Primärkammer (3) eine innere maximale Länge L in einer Längsrichtung der besagten Kammer aufweist und eine innere maximale Länge Φ in einer Querrichtung orthogonal zur Längsrichtung, deren L/Φ Verhältnis über 1,5 beträgt, wobei das Zündsystem an einem Längsende der Primärkammer gestaltet ist.

6. Gasgenerator nach einem beliebigen der vorstehenden Ansprüche 1 bis 5, **dadurch gekennzeichnet, daß** die Primärverbindung (4) weniger als 16 Gewichtsprozente der Explosionsladung darstellt, die von der Primär- und der Sekundärverbindung gebildet wird.

7. Gasgenerator nach Anspruch 6, **dadurch gekennzeichnet, daß** die Primärverbindung (4) unter 10 Gewichtsprozente der Explosionsladung darstellt, die von der Primär- und der Sekundärverbindung gebildet wird.

8. Gasgenerator nach einem beliebigen der vorstehenden Ansprüche 1 bis 7, **dadurch gekennzeichnet, daß** die Primärkammer unter 4 Gramm Primärverbindung (4) enthält.

9. Gasgenerator nach Anspruch 8, **dadurch gekennzeichnet, daß** die Primärkammer unter 2 Gramm Primärverbindung (4) enthält.

10. Gasgenerator nach einem beliebigen der vorstehenden Ansprüche 1 bis 9, **dadurch gekennzeichnet, daß** die Primärverbindung (4) unter folgenden Substanzen gewählt wird: doppelbasige Propergole (Treibstoffe); Verbund-Propergole; Verbund-Propergole mit mindestens einem Zuschlagstoff, der geeignet ist, das Sauerstoffgleichgewicht der Primärverbindung anzupassen; die ballistischen Pulver vom Typ Lova; die pyrotechnischen Zusammensetzungen auf der Grundlage von Basiskupfernitrat und Guanidinnitrat; die vorher genannten Zusammensetzungen mit zusätzlich einem oder mehreren Zuschlagstoffen; Mischungen oder Zusammenschlüsse aus den vorher genannten Verbindungen.

11. Gasgenerator nach einem beliebigen der vorstehenden Ansprüche 1 bis 10, **dadurch gekennzeichnet, daß** die Sekundärverbindung (6) unter folgenden Substanzen gewählt wird: eine Basiskomponente, die unter folgenden Substanzen gewählt wird: Ammoniumnitrat, Guanidinnitrat, Basiskupfernitrat; Mischungen oder Zusammenschlüsse aus diesen Basiskomponenten; eine der vorstehend genannten Basiskomponenten, die mit mindestens einem Zuschlagstoff gemischt oder zusammengeschlossen wird, der geeignet ist, den Sauerstoffausgleich der Sekundärverbindung oder der Explosionsladung anzupassen; eine der vorher genannten Basiskomponenten, die mit mindestens einem Zuschlagstoff gemischt oder zusammengeschlossen wird, der unter den folgenden Substanzen gewählt wird: Guanidinableitungen, Polyester, Ammoniumacetat, Oxamid oder Ammoniumoxamid oder eine Ableitung von letzteren, Harnstoff oder eine Ableitung davon, Hexogen, Oktogen, Aminotetrazol; eine der vorher genannten Basiskomponenten, die mit mindestens einem Zuschlagstoff gemischt oder zusammengeschlossen wird, der in seiner Initialform und/oder mit seinen Zersetzungsprodukten geeignet ist, einen Teil der Energie der Verbrennungserzeugnisse der Primärverbindung zu absorbieren; Mischungen oder Zusammenschlüsse der vorgenannten Verbindungen.

12. System zur Gasgeneration mit einem Gasgenerator nach einem beliebigen der vorstehenden Ansprüche 1 bis 11 und einen aufblasbaren Raum, die so gestaltet sind, daß die vom Gasgenerator freigesetzten Gase den besagten Raum aufblasen können.

13. System zur Gasgeneration mit einem Gasgenerator nach einem beliebigen der vorstehenden Ansprüche 1 bis 11 und einen Arbeitszylinder, die so gestaltet sind, daß die vom Gasgenerator freigesetzten Gase den Druck im Arbeitszylinder aufbauen können.
